# EUROPEAN PATENT SPECIFICATION

(11) **EP 4 552 972 B1**
(45) Date of publication and mention of the grant of the patent: **25.03.2026**
(21) Application number: 23383135.3
(22) Date of filing: 07.11.2023
(51) Int. Cl.: B64C 1/06, B64C 3/18, B29D 99/00

(54) **DOUBLE Y-SHAPED SPAR MADE OF COMPOSITE MATERIAL**
DOPPEL-Y-FÖRMIGER HOLM AUS VERBUNDWERKSTOFF
LONGERON EN FORME DE DOUBLE Y EN MATÉRIAU COMPOSITE

(43) Date of publication of application: 14.05.2025
(73) Proprietor: AIRBUS OPERATIONS, S.L.U., 28906 Getafe, Madrid (ES)
(72) Inventor: JARA RODELGO, Alvaro, 28906 GETAFE (Madrid) (ES); GONZALEZ ANTOHI, Miguel, 28906 GETAFE (Madrid) (ES); DE LA PUERTA VALLEJO, Mikel, 28906 GETAFE (Madrid) (ES)
(74) Representative: Herrero & Asociados, S.L.

(56) References cited:
- EP-A1- 3 095 691
- CN-A- 109 263 860
- US-A1- 2015 183 503
- US-A1- 2021 179 255
- US-B2- 7 445 744

## Description

### Object of the invention

The present invention refers to spars of composite materials, particularly spars used in the aerospace industry having a double Y-shape cross-section.

The spars according to the present invention can be used as spars for the airframe of the aircraft, for torsion boxes of the aircraft.

### Background of the invention

EP3095691A1 relates to a multi-spar torsion box structure comprising a plurality of spars of composite material arranged to form a multi-cell structure with two or more cells extending span-wise one after the other in the torsion box, and upper and lower skin covers of composite material respectively joined to upper and lower surfaces of the multi-cell structure.

The existing "double T"-section and the "omega"-section spars used in multi-spar torsion box structures have a limited momentum of inertia, and may suffer from buckling and post-buckling, as well as from torsional behavior. Furthermore, other manufacturing requirements such as weight savings and cost savings are beneficial to improve the existing spars and torsion boxes.

The present invention satisfies these demands and solves the drawbacks of the current existing spars used in torsion boxes.

### Description of the invention

This present invention relates to a spar that can be seen as a "double stringer" and which comprises an elongated core or web that permits the spar to connect or join two panels of a torsion box of an aircraft, e.g. a torsion box of a wing. The proposed spar can also be used in a vertical tailplane VTP", a horizontal tailplane "HTP", etc. The proposed composite material spar can be spaced further apart in a torsion box compared to conventional spars for the same torsion box. Hence, the present invention permits the replacement of two conventional spars of the state of the art by the proposed composite material spar of the invention.. Furthermore, the number of spars used in a torsion box can be reduced when substituting conventional spars by the composite material spar according to the present invention to obtain the same mechanical characteristics.

Hence, the present invention proposes a composite material spar (carbon fiber or glass fiber with thermoset or thermoplastic resin) that comprises upper flanges and lower flanges and that can be used in e.g., a torsion box of a wing by joining the upper flanges of the spar to a first (composite) panel of a torsion box of the aircraft and the lower flanges of the spar to a second (composite) panel of the torsion box of the aircraft, wherein the second panel is opposite to the first panel. The proposed spar comprises a structural cross-section that has a shape in double Y. This shape is specified in the present description as a double Y-shape and can correspond to the total or a part of the structural cross-section of the spar.

Furthermore, the use of composite materials provide excellent mechanical and weight properties, as well as the inspections and repairability compared to current spars made of CFRP (carbon fiber reinforced polymer).

The proposed spar is disclosed in the present description as a double Y-shaped cross-section spar. The double Y-shaped cross-section spar according to the present invention comprises at least: two cross-section opened triangular-shaped structures connected by a web that provides a double cross-section Y-shape. Furthermore, the double Y-shaped cross-section spar comprises upper and lower flanges connectable to panels of a torsion box of the aircraft. The double Y-shaped or double Y-section cross-section spar made of composite material has various benefits such as better structural efficiency, less wrinkles when manufacturing due to high angles (e.g. above 90 degrees, e.g. between 100 to 165 degrees), no corrosion and better NonDestructive Testing, NDT process.

The cross-section opened triangular-shaped structures of the double Y-shaped cross-section spar enhances its behavior to torsional loads. Furthermore, the slim part normal to the flange, called web, increases the momentum of inertia and the structural stiffness of the spar. The web or spar web can comprise manholes to allow the maintenance and repair activities or other type of holes, e.g. holes that permit aircraft systems passing through.

Furthermore, the double Y-shaped cross-section spar can have various cross-section shapes and can comprise vertical fins and an intermediate cap having a cross-section in a cross-shape, wherein the intermediate cap comprises upper and lower sections, each section having a T-shape cross-section each comprising a symmetric laminate. The use of composite materials for this purpose enhances the actual spar properties, as well as the inspections and repairability. The advantage of the intermediate cap is the ease of manufacturing the double Y-shaped cross-section spar. Connecting two separated halves of the double Y-shaped cross-section spar at an intermediate point facilitates the manufacturing. Thus, the T-shapes of the two halves are connected to form the upper and lower sections that, once joined to each other, form the intermediate cap. The two part may be joined by various techniques, but the T-shape of the upper and lower sections allow for example riveting, or a larger surface of contact for gluing, co-bounding or co-curing.

The proposed double Y-shaped cross-section spar according to the present invention provides an optimization of the conventional spars and can be used to connect two (composite) panels of a torsion box of the aircraft.

Advantageously, the proposed double Y-shaped cross-section spar permits:
- Better torsional and strain structural efficiency.
- Less wrinkles when manufacturing the spar due to high angles.
- No corrosion. Better NDT process. Currently in L-shape or T-shape spars, since they have curvature angles of 90° and a small curvature radio, their mechanical defects cannot be observed well through a NDT process. Contrarily, with curvature angles above 90° as the ones used in the manufacturing process for obtaining the double Y-shaped according to the present invention, this issue is solved.
- Less weight.
- One-Shot Assembly: reduced assembly cycle using co-curing.

The double Y-shaped cross-section spar according to the present invention provides an optimization of the "double T"-section and the "omega"-section spars existing in the art. Advantageously, the proposed double Y-shaped cross-section spar increases the momentum of inertia, enhances the buckling and post-buckling behavior, as well as the torsional behavior, and provides the most efficient cross-section shape. Furthermore, the Y-section optimizes the disposition of spars due to the wider effective surface of the feet, which implies weight savings , in particular because since the number of spars required to obtain the same mechanical properties may be lower when the spar according to the present invention is used instead of the spars existing in the state of the art, cost savings and a higher ROI.

Hence, in a first aspect, the present invention refers to a double Y-shaped cross-section spar made of composite material for an aircraft, the double Y-shaped cross-section spar that comprises a spar web having a cross-section in a I-shape, a lower part and an upper part connected by the spar web. The lower part comprises lower flanges configured to be connectable to a first panel of a torsion box of the aircraft, a first cross-section opened triangular-shaped structure that comprises first and second lower vertices respectively joined to the lower flanges and an upper vertex connected to a first end of the spar web. The upper part comprises upper flanges configured to be connectable to a second panel opposite the first panel (1010) of the torsion box of the aircraft, a second cross-section opened triangular-shaped structure that comprises first and second upper vertices respectively joined to the upper flanges and a lower vertex connected to a second end of the spar web. The first cross-section opened triangular-shaped structure, the second cross-section opened triangular-shaped structure and the spar web form a cross-section in a double Y-shape.

In one example, the lower flanges and the upper flanges are established in a preferably perpendicular direction to the spar web. The direction of the lower flanges and the upper flanges may not be totally perpendicular when the spars are integrated into a torsion box of the aircraft, wherein the torsion box comprised a first and second panel opposite to the first panel, wherein the first and second panel are established in a curved fashion.

In one example, the spar web further comprises an intermediate cap having a cross-section in a cross-shape, wherein the intermediate cap comprises upper and lower sections, each section having a T-shape cross-section each comprising a symmetric laminate and being connected to each other.

Graphite fiber-reinforced polymer, CFRP's are made of several layers. Each layer is a "cloth," "ribbon," or "strip" (like a piece of cloth) of carbon fibers. In this "fabric" the fibers can be disordered, woven or mostly oriented in one direction. In general, those that have a main orientation are used, because in this main direction we know that it has resistance to significant loads. Then, when the layers are stacked, each layer can be oriented as desired to adapt the load resistance of the final piece according to the orientations of each of its layers.

Composite laminates must be oriented to achieve the best possible properties, to avoid buckling and to prevent warping after manufacturing (the laminate must be symmetrical and balanced). The improvement of the laminate properties is related to where the fibers angles are oriented. That is, if the load goes in the direction of 0° according to the double Y-shaped spar reference axis, a greater percentage of laminates will be placed at 0° with respect to the double Y-shaped spar reference axis because that is where the laminates will have the best mechanical properties. The total percentage is divided into laminates at 0°, laminates at 90° and laminates at +/-45°. So, as the different parts of the Y-shaped spar work differently (lower flanges, the spar web and the intermediate cap), each part has to have a greater amount of laminates in the orientation in which it is of interest for the best mechanical response. An example of a symmetrical and balanced composite laminate may be: +45 °,-45 °,0 °,90 °,0 °,0 °,90 °,0 °,-45 °,+45 °, which is also written as (+45,-45,0,90,0)S).

In one example, the intermediate cap comprises upper and lower sections, each section having a T-shape cross-section each comprising a symmetric laminate composed by:
- a first layer comprising composite laminates that wrap the lower flanges, or upper flanges and the spar web, wherein a 70% of the total composite laminates from the first layer are oriented at a load angle +/-45°, wherein the load angle is the angle of the load with respect to the double Y-shaped spar reference axis;
- a second layer comprising composite laminates that can be established on top of the first layer wherein a 70% of the total composite laminates from the first layer are oriented at a load angle 0°; and
- a third layer comprising composite laminates that can be established on top of the second one, wherein a 70% of the total composite laminates from the third layer are oriented at a load angle +/-45°.

In one example, the lower flanges and the upper flanges comprise vertical fins established in a parallel direction to the spar web.

The composite material can comprise carbon fiber with thermoset or thermoplastic resin or glass fiber with thermoset or thermoplastic resin.

In some examples, the spar web further comprises manholes.

Another aspect of the present invention refers to the use of the double Y-shaped cross-section spar according to the first aspect of the invention in a torsion box of the aircraft by joining the lower flanges of the double Y-shaped cross-section spar to a first composite panel of a torsion box of the aircraft and joining the upper flanges of the double Y-shaped cross-section spar to a second composite panel of the torsion box of the aircraft.

In one example, joining the lower flanges of the double Y-shaped cross-section spar to a first composite panel of a torsion box of the aircraft comprises cocuring or cobounding, and joining the upper flanges of the double Y-shaped cross-section spar to a second composite panel of the torsion box of the aircraft comprises cocuring or cobounding.

Cobounding is a form of joining in which for example, the composites panels are previously cured and the flanges are uncured, and they are joined together using adhesive or viceversa.

Cocuring implies that all the pieces e.g. upper and lower flanges and the first and second composite panels are cured at the same time, creating a bond between them without the need for adhesives.

A third aspect of the present invention refers to a torsion box that comprises a plurality of double Y-shaped cross-section spars connected to the first panel of the torsion box of the aircraft by the lower flanges and to the second panel of the torsion box of the aircraft by the upper flanges. The proposed double Y-shaped cross-section spars can be spaced in the torsion box further apart compared to conventional spars of the state of the art. Hence, the present invention permits to limit the number of spars of the invention providing a lighter torsion box.

In some examples the torsion box is a torsion box of a wing, a vertical tailplane torsion box or a horizontal tailplane torsion box.

A fourth aspect according to the present invention refers to a method for manufacturing a torsion box comprising the double Y-shaped cross-section spar according to the first aspect of the invention. The method comprises placing composite material onto first molds that comprise a molding curvature *α* between 100 to 165 degrees, wherein *α* is a working angle formed in a joint between the first cross-section opened triangular-shaped structure and the lower flanges or between the first cross-section opened triangular-shaped structure and the upper flanges, wherein the first molds are associated with at least the shape of the spar and the lower flanges and the upper flanges. The method further comprises placing second molds associated with the shape of the first cross-section opened triangular-shaped structure and the second cross-section opened triangular-shaped structure against the composite material, placing composite material at least onto the second molds, closing the first molds and the second molds with third molds to obtain a closed mold that contains a torsion box preform, wherein the third molds are associated with at least the shape of the first panel of the torsion box and the shape of the second panel of the torsion box of the aircraft, and curing the torsion box preform with an autoclave cycle.

In one example, the method further comprises cutting the torsion box preform to obtain the torsion box.

In one example, curing the torsion box preform with an autoclave cycle comprises curing the torsion box preform at 180 degrees Celsius or less.

In one example, curing the torsion box preform with an autoclave cycle comprises partial curing previous to a final curing.

In one example, the method further comprises placing rowings in between the first molds and second molds.

In one example, the method further comprises obtaining the first molds, the second molds and the third molds with 3D printing.

In one example, the method further comprises using carbon fiber with thermoset or thermoplastic resin or glass fiber with thermoset or thermoplastic resin as composite material.

In one example, α is equal to 135°.

### Brief description of the drawings

For a better understanding of the above explanation and for the sole purpose of providing an example, some non-limiting drawings are included that schematically depict a practical embodiment.
Figure 1 shows a first example of the double Y-shaped cross-section spar according to the present invention.
Figure 2 shows a second example of the double Y-shaped cross-section spar according to the present invention.
Figure 3 shows other examples of the double Y-shaped cross-section spar according to the present invention.
Figure 4 shows molds used in the manufacturing method of a torsion box comprising the double Y-shaped cross-section spar according to the present invention.
Figure 5 shows an example torsion box comprising the double Y-shaped cross-section spar according to the present invention.

### Description of a detailed embodiment

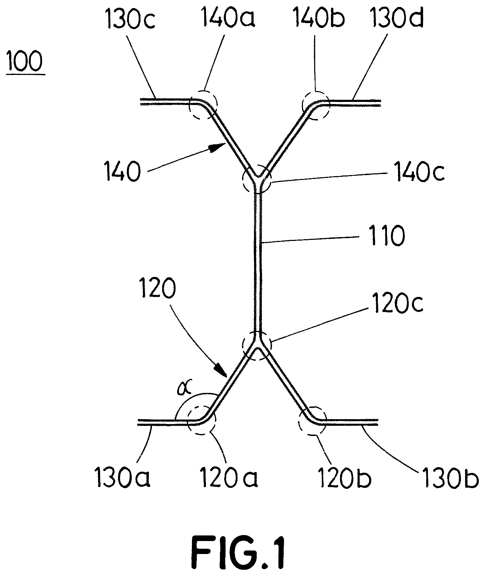

Figure 1 shows a first example of the double Y-shaped cross-section spar (100) according to the present invention. The double Y-shaped cross-section spar (100) can be made of composite material.

The double Y-shaped cross-section spar (100) comprises a spar web (110) having a cross-section in a I-shape.

The double Y-shaped cross-section spar (100) comprises two parts connected by the spar web (110), i.e., a lower part, and an upper part.

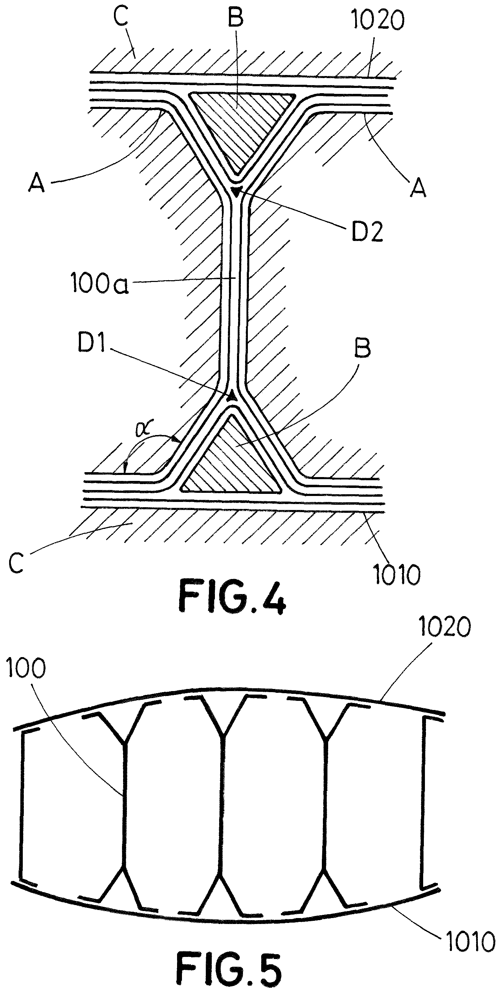

The lower part comprises lower flanges (130a, 130b) that can be configured to be connectable to a first panel (1010) of the torsion box of the aircraft (as shown in figure 5), a first cross-section opened triangular-shaped structure (120) that comprises first and second lower vertices (120a, 120b) respectively joined to the lower flanges (130a, 130b) and an upper vertex (120c) connected to a first end of the spar web (110).

The upper part comprises upper flanges (130c, 130d) configured to be connectable to a second panel (1020) opposite the first panel (1010) of the torsion box of the aircraft, a second cross-section opened triangular-shaped structure (140) that comprises first and second upper vertices (140a, 140b) respectively joined to the upper flanges (130c, 130d) and a lower vertex (140c) connected to a second end of the spar web (110).

The first cross-section opened triangular-shaped structure (120), the second cross-section opened triangular-shaped structure (140) and the spar web (110) form a cross-section in a double Y-shape.

The double Y-shaped cross-section spar (100) the most suitable example according to the present invention for production as this would still have an optimal structural behavior and could easily be mass-produced with a fast prototyped mold using 3D printing techniques.

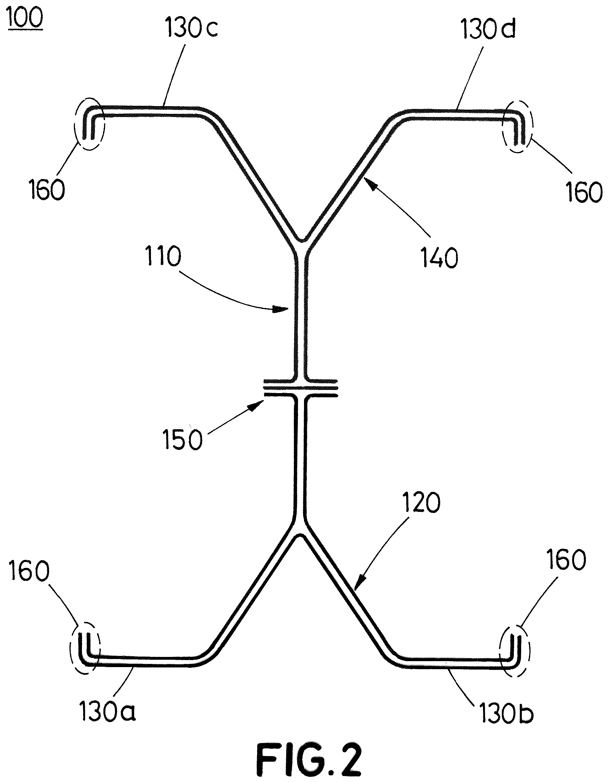

Figure 2 shows a second example of the double Y-shaped cross-section spar (100) according to the present invention.

In this example, the double Y-shaped cross-section spar (100) comprises all the elements described in figure 1 and further incorporates vertical fins (160) connected to the lower flanges (130a, 130b) and to the upper flanges (130c, 130d). The vertical fins (160) are established in a parallel direction to the spar web (110).

Furthermore, the spar web (110) further comprises a cross-shaped cross-section that comprises an intermediate cap (150) that comprises upper and lower sections connected to each other, each section having a T-shape cross-section and comprising a symmetric laminate composed by:
- a first layer comprising composite laminates that wrap the lower flanges, or upper flanges and the spar web, wherein a 70% of the total composite laminates from the first layer are oriented at a load angle +/-45°, wherein the load angle is the angle of the load with respect to the double Y-shaped spar reference axis;
- a second layer comprising composite laminates that can be established on top of the first layer wherein a 70% of the total composite laminates from the first layer are oriented at a load angle 0°; and
- a third layer comprising composite laminates that can be established on top of the second one, wherein a 70% of the total composite laminates from the third layer are oriented at a load angle +/-45°.

The example of double Y-shaped cross-section spar (100) comprises for the upper part and for the lower part flanges with vertical fins (160), and the web with a cross-shaped cross-section. This particular cross-section of the spar web (110) improves the behavior of the double Y-shaped cross-section spar (100) in the main load direction, enhancing the momentum of inertia and the elastic modulus (E) of the spar, but also stiffening the spar web (110) that decreases the probability of buckling.

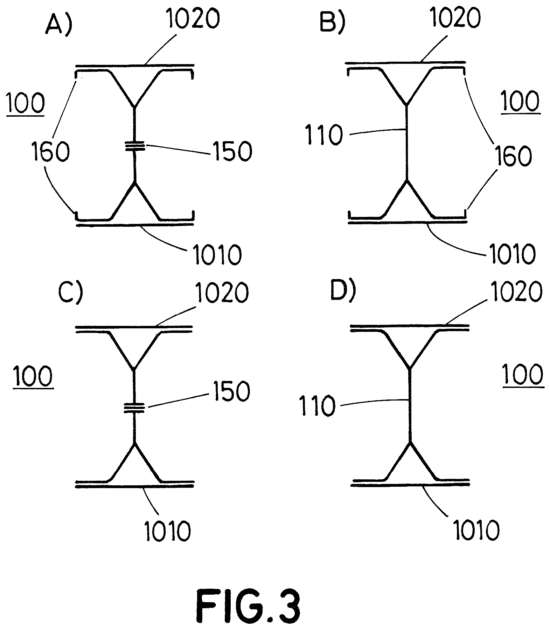

Figure 3 shows four examples of the double Y-shaped cross-section spars (100) according to the present invention.

Figure 3A shows the example described in previous figure 2.

Figure 3B shows a double Y-shaped cross-section spar (100) that comprises a spar web (110) having a cross-section in a I-shape and wherein the lower flanges (130a, 130b) and the upper flanges (130c, 130d) comprise vertical fins (160) established in a parallel direction to the spar web (110).

Figure 3C shows a double Y-shaped cross-section spar (100) that comprises a spar web (110) having a cross-shape cross-section.

Figure 3D shows a double Y-shaped cross-section spar (100) comprising a spar web (110) having a cross-section in a I-shape.

Figure 4 shows molds used in the manufacturing method of a torsion box comprising the double Y-shaped cross-section spar according to the present invention.

The manufacturing double Y-shaped cross-section spar (100) can comprise placing composite material onto first molds (A) that comprise a molding curvature *α* between 100 to 165 degrees, wherein *α* is a working angle formed in a joint between the first cross-section opened triangular-shaped structure (120) and the lower flanges (130a, 130b) or between the first cross-section opened triangular-shaped structure (120) and the upper flanges (130c, 130d), wherein the first molds (A) are associated with at least the shape of the spar (110) and the lower flanges (130a, 130b) and the upper flanges (130c, 130d).

In one example, α is equal to 135°.

Placing the composite material can comprise a fiber placement process over the molds of pre impregnated fiber or dry fiber that can be later be infused with resin.

Furthermore, the manufacturing method comprises placing second molds (B) associated with the shape of the first cross-section opened triangular-shaped structure (120) and the second cross-section opened triangular-shaped structure (140) against the composite material.

Furthermore, the manufacturing method comprises placing composite material at least onto the second molds (B).

Furthermore, the manufacturing method comprises closing the first molds (A) and the second molds (B) with third molds (C) to obtain a closed mold that contains a torsion box preform (100a), wherein the third molds (C) are associated with at least the shape of the first panel (1010) of the torsion box and the shape of the second panel (1020) of the torsion box of the aircraft. Hence, the closing of the molding permits conforming the shape of the spar.

Furthermore, the manufacturing method comprises curing the torsion box preform (100a) with an autoclave cycle.

Furthermore, the manufacturing method comprises cutting the torsion box preform (100a) to obtain the double Y-shaped cross-section spar (100).

Furthermore, the manufacturing method comprises curing the torsion box preform (100a) with an autoclave cycle comprises curing the Y-shaped preform (100a) at 180 degrees Celsius or less.

Furthermore, the manufacturing method comprises placing rowings (D1, D2) in between the first molds (A) and second molds (B).

The method further comprises manufacturing the first molds (A), the second molds (B) and the third molds (C) with 3D printing.

The method further comprises using carbon fiber with thermoset or thermoplastic resin or glass fiber with thermoset or thermoplastic resin as composite material.

The first molds (A) and the second molds (B) conform the spar web (110), the second molds (B) and the third molds (C) conform the first cross-section opened triangular-shaped structure (120) and the second cross-section opened triangular-shaped structure (140) and the first panel (1010) of the torsion box and the second panel (1020) of the torsion box. The α is variable that can be adapted to optimize the load transmission, but those that ensure that no wrinkles are formed during the manufacturing.

Figure 5 shows an example torsion box of a wing comprising the double Y-shaped cross-section spar according to the present invention. Figure 5 shows a possible arrangement of a torsion box of a wing that shows the first panel (1010) of the torsion box and the second panel (1020) of the torsion box of the aircraft, a front and a rear spar and a plurality of double Y-shaped cross-section spar (100) that will vary depending on the dimensions of the torsion box.

## Claims

1. A double Y-shaped cross-section spar (100) for a torsion box of an aircraft, the double Y-shaped cross-section spar (100) comprising:
- a spar web (110) having a cross-section in a I-shape;
- a lower part and an upper part connected by the spar web (110),
the lower part comprising:
- lower flanges (130a, 130b) configured to be connectable to a first panel (1010) of the torsion box of the aircraft;
- a first cross-section opened triangular-shaped structure (120) comprising:
first and second lower vertices (120a, 120b) respectively joined to the lower flanges (130a, 130b); and
an upper vertex (120c) connected to a first end of the spar web (110);
and
the upper part comprising:
- upper flanges (130c, 130d) configured to be connectable to a second panel (1020) opposite the first panel (1010) of the torsion box of the aircraft;
- a second cross-section opened triangular-shaped structure (140) comprising:
first and second upper vertices (140a, 140b) respectively joined to the upper flanges (130c, 130d); and
a lower vertex (140c) connected to a second end of the spar web (110),
wherein the first cross-section opened triangular-shaped structure (120), the second cross-section opened triangular-shaped structure (140) and the spar web (110) form a cross-section in a double Y-shape.

2. The double Y-shaped cross-section spar (100) according to claim 1, wherein the lower flanges (130a, 130b) and the upper flanges (130c, 130d) are established in a perpendicular direction to the spar web (110).

3. The double Y-shaped cross-section spar (100) according to claims 1 or 2, wherein the spar web (110) further comprises an intermediate cap (150) having a cross-section in a cross-shape.

4. The double Y-shaped cross-section spar (100) according to the previous claim, wherein the intermediate cap (150) comprises upper and lower sections connected to each other, each section having a T-shape cross-section each comprising a symmetric laminate composed by:
- a first layer comprising composite laminates that wrap the lower flanges (130a, 130b) or the upper flanges (130c, 130d) and the spar web (110) , wherein a 70% of the total composite laminates from the first layer are oriented at a load angle +/-45°, wherein the load angle is the angle of the load with respect to the Y-shaped spar reference axis;
- a second layer comprising composite laminates that can be established on top of the first layer wherein a 70% of the total composite laminates from the first layer are oriented at a load angle 0°; and
- a third layer comprising composite laminates that can be established on top of the second one, wherein a 70% of the total composite laminates from the third layer are oriented at a load angle +/-45°.

5. The double Y-shaped cross-section spar (100) according to any of the preceding claims, wherein the lower flanges (130a, 130b) and the upper flanges (130c, 130d) comprise vertical fins (160) established in a parallel direction to the spar web (110).

6. The double Y-shaped cross-section spar (100) according to any of the preceding claims, wherein the composite material comprises carbon fiber with thermoset or thermoplastic resin or glass fiber with thermoset or thermoplastic resin.

7. The double Y-shaped cross-section spar (100) according to the previous claims, wherein the spar web (110) further comprises manholes.

8. Use of the double Y-shaped cross-section spar (100) according to any of the preceding claims in a torsion box of the aircraft by:
- joining the lower flanges (130a, 130b) of the double Y-shaped cross-section spar (100) to a first panel (1010) of a torsion box of the aircraft; and
- joining the upper flanges (130c, 130d) of the double Y-shaped cross-section spar (100) to a second panel (1020) of the torsion box of the aircraft, the second panel (1020) opposite to the first panel (1010).

9. The use of the Y-shaped spar (100) according to the previous claim, wherein joining the lower flanges (130a, 130b) of the double Y-shaped cross-section spar (100) to a first composite panel of a torsion box of the aircraft comprises cocuring or cobounding,
wherein joining the upper flanges (130c, 130d) of the double Y-shaped cross-section spar (100) to a second composite panel of the torsion box of the aircraft comprises cocuring or cobounding.

10. A torsion box of an aircraft, the torsion box comprising:
- a first panel (1010);
- a second panel (1020);
- a plurality of double Y-shaped cross-section spars (100) according to claims **1 to** 9, wherein the plurality of double Y-shaped cross-section spars (100) are connected to:
the first panel (1010) by the lower flanges (130a, 130b); and
the second panel (1020) by the upper flanges (130c, 130d).

11. The torsion box according to the previous claim being a torsion box of a wing or a horizontal tailplane (HTP) or a vertical tailplane (VTP).

12. Method for manufacturing a torsion box comprising the double Y-shaped cross-section spar (100) according to claims 1 to 7, the method comprising:
- placing composite material onto first molds (A) that comprise a molding curvature *α* between 100 to 165 degrees, wherein *α* is a working angle formed in a joint between the first cross-section opened triangular-shaped structure (120) and the lower flanges (130a, 130b) or between the first cross-section opened triangular-shaped structure (120) and the upper flanges (130c, 130d), wherein the first molds (A) are associated with at least the shape of the spar (110) and the lower flanges (130a, 130b) and the upper flanges (130c, 130d);
- placing second molds (B) associated with the shape of the first cross-section opened triangular-shaped structure (120) and the second cross-section opened triangular-shaped structure (140) against the composite material;
- placing composite material at least onto the second molds (B);
closing the first molds (A) and the second molds (B) with third molds (C) to obtain a closed mold that contains a torsion box preform (100a), wherein the third molds (C) are associated with at least the shape of the first panel (1010) of the torsion box and the shape of the second panel (1020) of the torsion box of the aircraft,
- and
curing the torsion box preform (100a) with an autoclave cycle.

13. The method according to claim 12 further comprising cutting the torsion box preform (100a) to obtain the double Y-shaped cross-section spar (100).

14. The method according to claims 12 to 13, further comprising placing rowings (D1, D2) in between the first molds (A) and second molds (B).

15. The method according to claims 12 to 14, wherein α is equal to 135°.

## Patentansprüche

1. Holm (100) mit doppel-Y-förmigem Querschnitt für einen Torsionskasten eines Flugzeugs, wobei der Holm (100) mit doppel-Y-förmigem Querschnitt folgendes aufweist:
einen Holmsteg (110), der einen Querschnitt in einer I-Form hat;
ein unteres Teil und ein oberes Teil, die durch den Holmsteg (110) verbunden sind, wobei das untere Teil folgendes aufweist:
untere Flansche (130a, 130b), die so konfiguriert sind, dass sie zu einer ersten Platte (1010) des Torsionskastens des Flugzeugs verbindbar sind;
eine erste Struktur (120) mit geöffnetem dreieckförmigem Querschnitt, die folgendes aufweist:
erste und zweite untere Knotenpunkte (120a, 120b), die jeweils an die unteren Flansche (130a, 130b) gefügt sind; und
einen oberen Knotenpunkt (120c), der mit einem ersten Ende des Holmstegs (110) verbunden ist; und
wobei das obere Teil folgendes aufweist:
obere Flansche (130c, 130d), die so konfiguriert sind, dass sie mit einer zweiten Platte (1020), die der ersten Platte (1010) des Torsionskastens des Flugzeugs gegenüberliegt, verbindbar sind;
eine zweite Struktur (140) mit geöffnetem dreieckförmigem Querschnitt, die folgendes aufweist:
erste und zweite obere Knotenpunkte (140a, 140b), die jeweils an die oberen Flansche (130c, 130d) gefügt sind; und
einen unteren Knotenpunkt (140c), der mit einem zweiten Ende des Holmstegs (110) verbunden ist,
wobei die erste Struktur (120) mit geöffnetem dreieckförmigem Querschnitt, die zweite Struktur (140) mit geöffnetem dreieckförmigem Querschnitt und der Holmsteg (110) einen Querschnitt in einer doppelten Y-Form bilden.

2. Holm (100) mit doppel-Y-förmigem Querschnitt nach Anspruch 1, wobei die unteren Flansche (130a, 130b) und die oberen Flansche (130c, 130d) in einer senkrechten Richtung zu dem Holmsteg (110) eingerichtet sind.

3. Holm (100) mit doppel-Y-förmigem Querschnitt nach Anspruch 1 oder 2, wobei der Holmsteg (110) ferner einen Zwischenabschluss (150), der einen Querschnitt in einer Kreuzform hat, aufweist.

4. Holm (100) mit doppel-Y-förmigem Querschnitt nach dem vorherigen Anspruch, wobei der Zwischenabschluss (150) untere und obere Bereiche, die miteinander verbunden sind, aufweist, wobei jeder Bereich einen T-förmigem Querschnitt hat, wobei jeder einen symmetrischen Schichtaufbau aufweist, der aus folgendem besteht:
einer ersten Schicht, die Verbundschichtaufbauten aufweist, die die unteren Flansche (130a, 130b) oder die oberen Flansche (130c, 130d) und den Holmsteg (110) umwickeln, wobei 70% der gesamten Verbundschichtaufbauten der ersten Schicht in einem Belastungswinkel von +/-45° orientiert sind, wobei der Belastungswinkel der Winkel der Belastungen mit Bezug auf die Referenzachse des Y-förmigen Holms ist;
eine zweite Schicht, die Verbundschichtaufbauten aufweist, die oben auf der ersten Schicht eingerichtet sein können, wobei 70% der gesamten Verbundschichtaufbauten der ersten Schicht in einem Belastungswinkel von 0° orientiert sind; und
eine dritte Schicht, die Verbundschichtaufbauten aufweist, die oben auf der Zweiten eingerichtet sein können, wobei 70% der gesamten Verbundschichtaufbauten der dritten Schicht in einem Belastungswinkel von +/-45° orientiert ist.

5. Holm (100) mit doppel-Y-förmigem Querschnitt nach einem der vorhergehenden Ansprüche, wobei die unteren Flansche (130a, 130b) und die oberen Flansche (130c, 130d) vertikale Rippen (160) aufweisen, die in einer Parallelrichtungen zu dem Holmsteg (110) eingerichtet sind.

6. Holm (100) mit doppel-Y-förmigem Querschnitt nach einem der vorhergehenden Ansprüche, wobei das Verbundmaterial Kohlenstofffaser mit Duroplast- oder Thermoplastharz oder Fieberglas mit Duroplast- oder Thermoplastharz aufweist.

7. Holm (100) mit doppel-Y-förmigem Querschnitt nach den vorherigen Ansprüchen, wobei der Holmsteg (110) ferner Einstiegsöffnungen aufweist.

8. Verwendung des Holms (100) mit doppel-Y-förmigem Querschnitt nach einem der vorhergehenden Ansprüche in einem Torsionskasten des Flugzeugs durch:
Fügen der unteren Flansche (130a, 130b) des Holms (100) mit doppel-Y-förmigem Querschnitt an eine erste Platte (1010) des Torsionskastens des Flugzeugs; und
Fügen der oberen Flansche (130c, 130d) des Holms (100) mit doppel-Y-förmigem Querschnitt an eine zweite Platte (1020) des Torsionskastens des Flugzeugs, wobei die zweite Platte (1020) gegenüberliegend der ersten Platte (1010) ist.

9. Verwendung des Y-förmigen Holms (100) nach dem vorhergehenden Anspruch, wobei das Fügen der unteren Flansche (130a, 130b) des Holms (100) mit doppel-Y-förmigem Querschnitt an eine erste Verbundplatte eines Torsionskastens des Flugzeugs Co-Curing oder Co-Bonding aufweist.

10. Torsionskastens eines Flugzeugs, wobei der Torsionskastens folgendes aufweist:
eine erste Platte (1010);
eine zweite Platte (1020);
eine Vielzahl von Holmen (100) mit doppel-Y-förmigem Querschnitt nach den Ansprüchen 1 bis 9, wobei die Vielzahl von Holmen (100) mit doppel-Y-förmigem Querschnitt verbunden sind mit:
der ersten Platte (1010) durch die unteren Flansche (130a, 130b); und
die zweite Platte (1020) durch die unteren Flansche (130c, 130d).

11. Torsionskastens nach dem vorhergehenden Anspruch, wobei dieser ein Torsionskasten eines Flügels oder eines Höhenleitwerks (HTP) oder eines Seitenleitwerks (VTP) ist.

12. Verfahren zur Herstellung eines Torsionskastens, der den Holm (100) mit doppel-Y-förmigem Querschnitt nach einem der Ansprüche 1 bis 7 aufweist, wobei das Verfahren folgendes aufweist:
Platzieren des Verbundmaterials auf die ersten Gussformen (A), die eine Krümmung α zwischen 100 bis 165 Grad aufweisen, wobei α ein Arbeitswinkel ist, der in einer Verbindung zwischen der ersten Struktur (120) mit geöffnetem dreieckförmigem Querschnitt und den unteren Flanschen (130a, 130b) oder zwischen der ersten Struktur (120) mit geöffnetem dreieckförmigem Querschnitt und den oberen Flanschen (130c, 130d) gebildet ist, wobei die ersten Gussformen (A) mit mindestens der Form des Holms (110) und der unteren Flansche (130a, 130b) und der oberen Flansche (130c, 130d) verknüpft sind;
Platzieren zweiter Gussformen (B), die mit der Form der ersten Struktur (120) mit geöffnetem dreieckförmigem Querschnitt und der zweiten Struktur (140) mit geöffnetem dreieckförmigem Querschnitt verknüpft sind, gegen das Verbundmaterial;
Platzieren des Verbundmaterials mindestens in die zweite Gussform (B);
Schließen der ersten Gussformen (A) und der zweiten Gussformen (B) mit dritten Gussformen (C), um eine geschlossene Form, die eine Torsionskastenvorform (100a) enthält, zu erhalten, wobei die dritten Gussformen (C) mit mindestens der Form der ersten Platte (1010) des Torsionskastens und der Form der zweiten Platte (1020) des Torsionskastens des Flugzeugs verknüpft sind, und
Aushärten der Torsionskastenvorform (100a) mit einem autoklaven Zyklus.

13. Verfahren nach Anspruch 12, wobei dieses ferner das Schneiden der Torsionskastenvorform (100a) aufweist, um den Holm (100) mit doppel-Y-förmigem Querschnitt zu erhalten.

14. Verfahren nach den Ansprüchen 12 bis 13, wobei dieses ferner das Platzieren von Rudern (D1, D2) zwischen den ersten Gussformen (A) und zweiten Gussformen (B) aufweist.

15. Verfahren nach den Ansprüchen 12 bis 14, wobei α gleich 135° ist.

## Revendications

1. Longeron (100) de section transversale en forme de double Y pour un caisson de torsion d'aéronef, le longeron (100) de section transversale en forme de double Y comprenant :
- une âme de longeron (110) présentant une section transversale en forme de I ;
- une partie inférieure et une partie supérieure reliées par l'âme de longeron (110),
la partie inférieure comprenant :
- des brides inférieures (130a, 130b) configurées pour pouvoir être reliées à un premier panneau (1010) du caisson de torsion de l'aéronef ;
- une première structure (120) de forme triangulaire ouverte en section transversale comprenant :
des premier et second sommets inférieurs (120a, 120b) respectivement reliés aux brides inférieures (130a, 130b) ; et
un sommet supérieur (120c) relié à une première extrémité de l'âme de longeron (110) ;
et
la partie supérieure comprenant :
- des brides supérieures (130c, 130d) configurées pour pouvoir être reliées à un second panneau (1020) opposé au premier panneau (1010) du caisson de torsion de l'aéronef ;
- une seconde structure (140) de forme triangulaire ouverte en section transversale comprenant :
des premier et second sommets supérieurs (140a, 140b) respectivement reliés aux brides supérieures (130c, 130d) ; et
un sommet inférieur (140c) relié à une seconde extrémité de l'âme de longeron (110),
dans lequel la première structure de forme triangulaire ouverte en section transversale (120), la seconde structure de forme triangulaire ouverte en section transversale (140) et l'âme de longeron (110) forment une section transversale en forme de double Y.

2. Longeron (100) de section transversale en forme de double Y selon la revendication 1, dans lequel les brides inférieures (130a, 130b) et les brides supérieures (130c, 130d) sont établies dans une direction perpendiculaire à l'âme de longeron (110).

3. Longeron (100) de section transversale en forme de double Y selon la revendication 1 ou 2, dans lequel l'âme de longeron (110) comprend en outre un capuchon intermédiaire (150) présentant une section transversale en forme de croix.

4. Longeron (100) de section transversale en forme de double Y selon la revendication précédente, dans lequel le capuchon intermédiaire (150) comprend des sections supérieure et inférieure reliées entre elles, chaque section présentant une section transversale en forme de T comprenant chacune un stratifié symétrique composé de :
- une première couche comprenant des stratifiés composites qui entourent les brides inférieures (130a, 130b) ou les brides supérieures (130c, 130d) et l'âme de longeron (110), dans laquelle 70 % de tous les stratifiés composites de la première couche sont orientés à un angle de charge +/-45°, dans lequel l'angle de charge est l'angle de la charge par rapport à l'axe de référence de longeron en forme de Y ;
- une deuxième couche comprenant des stratifiés composites qui peuvent être établis dessus la première couche, dans laquelle 70 % de tous les stratifiés composites de la première couche sont orientés à un angle de charge de 0° ; et
- une troisième couche comprenant des stratifiés composites qui peuvent être établis dessus la deuxième couche, dans laquelle 70 % de tous les stratifiés composites de la troisième couche sont orientés à un angle de charge de +/-45°.

5. Longeron (100) de section transversale en forme de double Y selon l'une quelconque des revendications précédentes, dans lequel les brides inférieures (130a, 130b) et les brides supérieures (130c, 130d) comprennent des ailettes verticales (160) établies dans une direction parallèle à l'âme de longeron (110).

6. Longeron (100) de section transversale en forme de double Y selon l'une quelconque des revendications précédentes, dans lequel le matériau composite comprend une fibre de carbone avec une résine thermodurcie ou thermoplastique ou une fibre de verre avec une résine thermodurcie ou thermoplastique.

7. Longeron (100) de section transversale en forme de double Y selon les revendications précédentes, dans lequel l'âme de longeron (110) comprend en outre des regards.

8. Utilisation du longeron (100) de section transversale en forme de double Y selon l'une quelconque des revendications précédentes dans un caisson de torsion de l'aéronef par :
- l'assemblage des brides inférieures (130a, 130b) du longeron (100) de section transversale en forme de double Y à un premier panneau (1010) d'un caisson de torsion de l'aéronef ; et
- l'assemblage des brides supérieures (130c, 130d) du longeron (100) de section transversale en forme de double Y à un second panneau (1020) du caisson de torsion de l'aéronef, le second panneau (1020) étant opposé au premier panneau (1010).

9. Utilisation du longeron (100) de section transversale en forme de double Y selon la revendication précédente, dans laquelle l'assemblage des brides inférieures (130a, 130b) du longeron (100) de section transversale en forme de double Y à un premier panneau composite d'un caisson de torsion de l'aéronef comprend un co-durcissement ou une co-délimitation,
dans laquelle l'assemblage des brides supérieures (130c, 130d) du longeron (100) de section transversale en forme de double Y à un second panneau composite du caisson de torsion de l'aéronef comprend un co-durcissement ou une co-délimitation.

10. Caisson de torsion d'un aéronef, le caisson de torsion comprenant :
- un premier panneau (1010) ;
- un second panneau (1020) ;
- une pluralité de longerons (100) de section transversale en forme de double Y selon les revendications 1 à 9, dans lequel la pluralité de longerons (100) de section transversale en forme de double Y sont reliés :
au premier panneau (1010) par les brides inférieures (130a, 130b) ; et
au second panneau (1020) par les brides supérieures (130c, 130d).

11. Caisson de torsion selon la revendication précédente étant un caisson de torsion d'une aile ou d'un empennage horizontal (HTP) ou d'un empennage vertical (VTP).

12. Procédé de fabrication d'un caisson de torsion comprenant le longeron (100) de section transversale en forme de double Y selon les revendications 1 à 7, le procédé comprenant :
- le placement d'un matériau composite sur des premiers moules (A) qui comprennent une courbure de moulage *α* comprise entre 100 et 165 degrés, dans lequel *α* est un angle de travail formé dans un assemblage entre la première structure de forme triangulaire ouverte en section transversale (120) et les brides inférieures (130a, 130b) ou entre la première structure de forme triangulaire ouverte en section transversale (120) et les brides supérieures (130c, 130d), dans lequel les premiers moules (A) sont associés à au moins la forme du longeron (110) ainsi que des brides inférieures (130a, 130b) et des brides supérieures (130c, 130d) ;
- le placement de deuxièmes moules (B) associés à la forme de la première structure de forme triangulaire ouverte en section transversale (120) et de la seconde structure de forme triangulaire ouverte en section transversale (140) contre le matériau composite ;
- le placement d'un matériau composite au moins sur les deuxièmes moules (B) ;
fermeture des premiers moules (A) et des deuxièmes moules (B) avec des troisièmes moules (C) pour obtenir un moule fermé qui contient une préforme de caisson de torsion (100a), dans lequel les troisièmes moules (C) sont associés à au moins la forme du premier panneau (1010) du caisson de torsion et la forme du second panneau (1020) du caisson de torsion de l'aéronef,
- et
le durcissement de la préforme de caisson de torsion (100a) avec un cycle d'autoclave.

13. Procédé selon la revendication 12 comprenant en outre la découpe de la préforme de caisson de torsion (100a) pour obtenir le longeron (100) de section transversale en forme de double Y.

14. Procédé selon les revendications 12 et 13, comprenant en outre le placement de cordages (D1, D2) entre les premiers moules (A) et les deuxièmes moules (B).

15. Procédé selon les revendications 12 à 14, dans lequel *α* est égal à 135°.
